# EUROPEAN PATENT APPLICATION

(11) **EP 0 564 729 A1**
(43) Date of publication of application: **13.10.1993**
(21) Application number: 92303139.7
(22) Date of filing: 08.04.1992
(51) Int. Cl.: F01N 3/02

(54) **Automotive muffler and dust catcher assembly**

(71) Applicant: CHIA SHIH ENTERPRISES Co., Ltd., Min Hsiung Hsien, Chia I (TW)
(72) Inventor: Lin, Chi-Hsiang, Min Hsiung Hsien, Chia I (TW)
(74) Representative: Gordon, Michael Vincent

(57) **Abstract**

An automotive muffler and dust catcher assembly comprising a muffler (1) attached to a dust catcher (2), said muffler having an intake pipe (9) for guiding a motor vehicle's exhaust emission and an outlet pipe (8) for exhaust of intake gas, wherein said motor vehicle's exhaust emission is guided into said muffler (1) by said intake pipe (9), forming into a turbulent flow of gas to stir up and heat water contained in at least said dust catcher (2) and permitting particles in said exhaust emission to be carried in said water and gathered in a dust bag (7) inside said dust catcher (2), also encouraging vibrating waves produced by the exhaust explosion of the motor vehicle's exhaust emission to be gradually absorbed by the moving flow of water in said assembly.

## Description

The present invention relates to a muffler and dust catcher assembly and, more particularly, to an automotive muffler and dust catcher assembly for deadening noises and removing dust from an exhaust pipe of a motor vehicle.

An automotive muffler (sometimes called a silencer) is an exhaust device often containing two perforated pipes packed in a sound-deadening material and connected between front and rear portions of an exhaust pipe of a motor vehicle. Because this structure of automotive muffler affects the performance of the cylinders of the motor vehicle in exhausting emissions, the horsepower of the motor vehicle is relatively reduced. Furthermore, various catalytic conversion devices are known and used in motor vehicles to eliminate or reduce air pollution. However, catalytic conversion devices are not suitable for dieselized motor vehicles. Therefore, the emissions from dieselized motor vehicles cause relatively severe air pollution problems.

One object of the present invention is to provide an automotive muffler and dust catcher assembly which guides a motor vehicle's exhaust emission to stir up water in the assembly into a turbulent flow for eliminating vibrating waves from the exhaust explosion of the exhaust emission.

Another object of the present invention is to provide an automotive muffler and dust catcher assembly which utilizes the heat from the motor vehicle's exhaust emission to heat water in the assembly into steam for binding particles together thus allowing the particles in the motor vehicle's exhaust emission to be carried in the water and gathered in a dust bag inside the dust catcher.

Protection for the present invention is as defined in independent claims 1 and 4.

The present invention will be best understood from the following description, and the accompanying drawings in which:

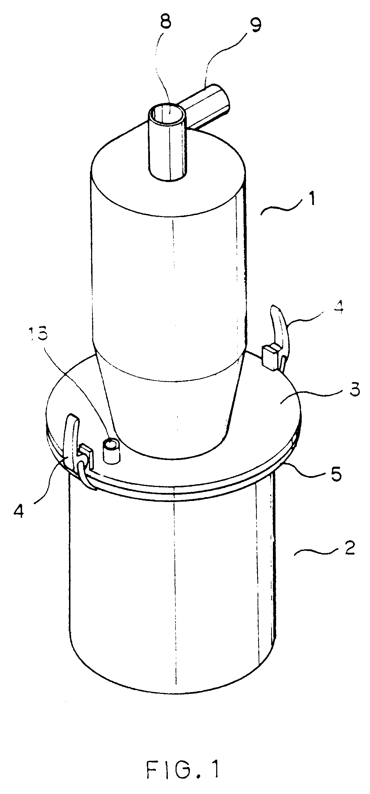

Fig. 1 is a perspective view of the preferred embodiment of the muffler and dust catcher assembly of the present invention;
Fig. 2 is a longitudinal cross-section thereof; and
Fig. 3 is a cross-section taken on line A-A of Fig. 2.

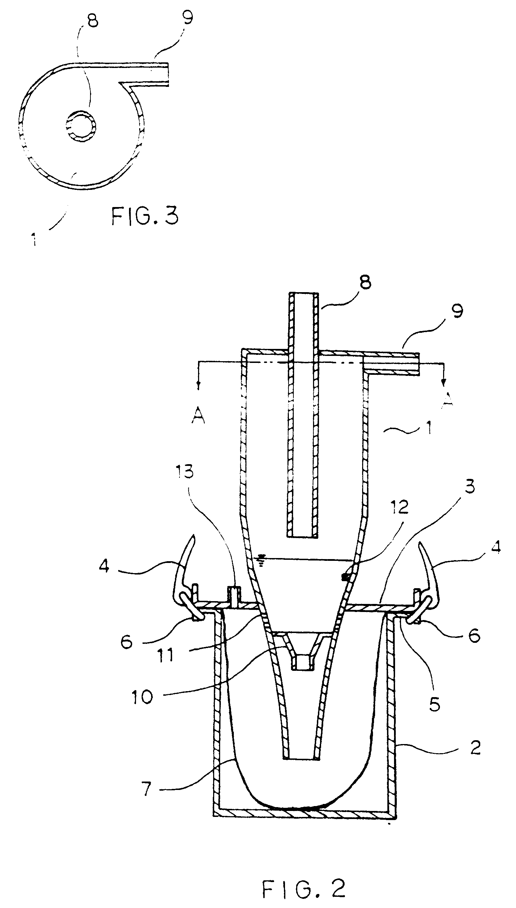

Referring to the annexed drawings in detail, a muffler and dust catcher assembly is generally comprised of a muffler 1 and a dust catcher 2. The muffler 1 is made in a cylindrical shape having a ring 3 externally attached to the reducing bottom end thereof at a suitable location. The ring 3 of the muffler 1 has snap fasteners 4 attached to the peripheral edge thereof and spaced from one another at equal interval. The dust catcher 2 is made from a cylindrical casing having a bottom end closed, and a top end opened for inserting the reducing end of the muffler 1. The opened top end of the casing of the dust catcher has an outward top flange 5 horizontally formed on the top edge thereof. The outward top flange 5 of the dust catcher 2 has hooks 6 on the bottom edge thereof at locations corresponding to the snap fasteners 4. By fastening the snap fasteners 4 to the hooks 6, the muffler 1 is secured to the dust catcher 2 with the ring 3 covered over the outward top flange 5 (see Fig. 2).

A non-woven dust bag 7 is placed in the dust catcher 2 with the border edge thereof retained in between the ring 3 of the muffler 1 and the outward top flange 5 of the dust catcher 2.

The muffler 1 further comprises an outlet pipe 8 on the top face thereof, and an intake pipe 9 tangent to the peripheral wall adjacent to the top face thereof for guiding a motor vehicle's exhaust emission into the muffler 1. Because the intake pipe 9 is tangent to the peripheral wall of the muffler 1, (see Fig. 3) exhaust emission from a motor vehicle is guided to swirl downwards along the inner wall surface of the muffler 1. A hopper-shaped water guide 10 is fastened inside the reducing bottom end of the muffler 1 at a location below the ring 3. A plurality of small through holes 11 are made in the peripheral wall of the muffler 1 at locations between the hopper-shaped water guide 10 and the ring 3. A water level detector 12 is fastened inside the muffler 1 at a location between the ring 3 and the outlet pipe 8. Finally, a water intake hole 13 is made in the ring 3 for filling cooling water into the dust catcher 2.

The muffler and dust catcher assembly is fastened inside a motor vehicle at a suitable location with the water intake hole 13 connected to a water tank, and with the intake pipe 9 connected to the motor vehicle's exhaust pipe. Before operation, water is pumped from the water tank into the dust catcher 2. The water level detector 12 automatically detects the level of water in the dust catcher 2 and the muffler 1. When the water level of the contained water in the dust catcher 2 and the muffler 1 drops below the predetermined level, the water level detector 12 automatically turns on a water pump to pump water from the water tank into the dust catcher 2 to make up for the deficiency. When the motor vehicle starts or during the running of the motor vehicle, exhaust emission of the motor vehicle is guided into the muffler 1 through the intake pipe 9. By means of the guiding of the intake pipe 9 which is tangent to the peripheral wall of the muffler 1, intake gas from the motor vehicle's exhaust emission rotates downwards along the inner wall surface of the muffler 1 to swirl the contained water, causing particles in the rotary intake gas to be carried in the swirling flow of water. At the same time, the vibrating waves produced by the exhaust explosion of the motor vehicle's exhaust emission are gradually absorbed by the swirling flow of water. During the operation of the muffler and dust catcher assembly, the water contained in the dust catcher 2 is simultaneously heated by the hot engine emission and partly turned into steam. Particles in the intake gas will also be bound together by the steam in the muffler 1 and drop into the dust catcher 2.

The hopper-shaped water guide 10 guides dust-contained flow of water to enter the dust catcher 2 permitting the particles therein to be accumulated in the dust catcher 2. The hopper-shaped water guide 10 simultaneously prohibits the swirling flow of water in the muffler 1 from stirring up the dust-contained water in the dust catcher 2, and therefore returned flow of water which flows through the small through holes 11 back into the muffler 1 contains less impurities.

After a certain length of time in service (preferably within 1,000 kilometers), the non-woven dust bag 7 shall be replaced, and the dust catcher 2 shall be cleaned. The dust catcher 2 can be conveniently detached from the muffler 1 by unfastening the snap fasteners 4. Once replacement has been made, the dust catcher 2 is attached to the muffler 1 again and fixedly retained in place by fastening the snap fasteners 4.

As illustrated, the present invention is to provide an automotive muffler and dust catcher assembly which utilizes a motor vehicle's exhaust emission to stir up water into a turbulent flow for eliminating the vibrating waves from the exhaust explosion, and which utilizes the heat from a motor vehicle's exhaust emission to heat water into steam for binding particles and permits the particles in the motor vehicle's exhaust emission to be gathered in a non-woven dust bag.

## Claims

1. An automotive muffler and dust catcher assembly comprising:
a dust catcher (2), said dust catcher comprising a casing having a bottom end thereof closed and a top end thereof opened, and a dust bag (7) placed inside said casing for catching dirt in a motor vehicle's exhaust emission, said top end of said casing having an outward horizontal flange (5) around a peripheral edge thereof, said outward horizontal flange having a plurality of hooks (6) spaced on a bottom edge thereof at equal interval; and
a muffler (1) attached to said dust catcher (2), said muffler comprising a cylindrical casing having a ring (3) externally attached to a reducing bottom end thereof, said reducing bottom end of said muffler (1) being inserted through said top end of said dust catcher (2) with said ring (3) attached to said outward horizontal flange (5) by snap fasteners (4) on said ring releasably respectively fastened to said hooks (6) on said outward horizontal flange, the cylindrical casing of said muffler having an intake pipe (9) tangent to a peripheral wall thereof for guiding a motor vehicle's exhaust emission into said muffler, an outlet pipe (8) on a top face thereof for exhaust of intake gas, a hopper-shaped water guide (10) fastened inside said reducing bottom end at a location below said ring (3), and at least one through hole (11) formed in the cylindrical casing of said muffler at a location between said hopper-shaped water guide (10) and said ring (3).

2. An automotive muffler and dirt catcher assembly according to claim 1, in which a water intake hole (13) connectible to a water tank is formed in said ring (3), and a water level detector (12) is fastened inside said muffler at a location between said ring (3) and said outlet pipe (8) to automatically control a water pump in pumping water from said water tank into said dust catcher and said muffler to a predetermined water level.

3. An automatic muffler and dirt catcher assembly according to claim 1 or claim 2, in which an open end of said dust bag (7) is sandwiched between said ring (3) and said outward horizontal flange (5).

4. An automatic muffler and dust catcher assembly comprising a muffler (1) attached to a dust catcher (2), said muffler having an intake pipe (9) for guiding a motor vehicle's exhaust emission and an outlet pipe (8) for exhaust of intake gas, wherein said motor vehicle's exhaust emission is guided into said muffler (1) by said intake pipe (9), forming into a turbulent flow of gas to stir up and heat water contained in at least said dust catcher (2) and permitting particles in said exhaust emission to be carried in said water and gathered in a dust bag (7) inside said dust catcher (2), also encouraging vibrating waves produced by the exhaust explosion of the motor vehicle's exhaust emission to be gradually absorbed by the moving flow of water in said assembly.
